# EUROPEAN PATENT APPLICATION

(11) **EP 4 790 735 A2**
(43) Date of publication of application: **12.08.2026**
(21) Application number: 26180068.4
(22) Date of filing: 13.06.2023
(51) Int. Cl.: H01F 41/12

(54) **INFILTRATING MATERIAL INTO A COIL**

(62) Document number(s) of the earlier application(s) in accordance with Art. 76 EPC: 23739724.5 / 4 728 249
(71) Applicant: Micro Motion, Inc., Boulder, CO 80301 (US)
(72) Inventor: PANKRATZ, Anthony William, Arvada, 80403 (US); SCOTT, Kevin M., Lyons, 80540 (US); POLIZZOTTO, Emmalie, Boulder, 80301 (US); HERSHEY, Cynthia Elizabeth, Berthoud, 80513 (US); SPOMER, Michael, Longmont, 80501 (US); NIELSON, Jeffrey D., Littleton, 80127 (US)
(74) Representative: Ellis, Christopher Paul

(57) **Abstract**

A coil bobbin (220cb, 1020cb) for coil infiltrating material into a coil (220cc) is provided. The coil bobbin (220cb, 1020cb) comprises a bobbin base (225cb, 1025cb), a bobbin lip (226cb, 1026cb), and a coil groove (224cb, 1024cb) extending between the bobbin base (225cb, 1025cb) and the bobbin lip (226cb, 1026cb). The coil groove (224cb, 1024cb) includes one or more bobbin openings (227cb, 1027cb) configured to apply a pressure differential to the coil groove (224cb, 1024cb).

## Description

### TECHNICAL FIELD

The embodiments described below relate to coil transducers and, more particularly, to infiltrating material into a coil.

### BACKGROUND

Coil transducers typically include a coil wire that is disposed about a bobbin with a hollow inner portion. A magnet moves in and out of the hollow inner portion of the bobbin to generate a current in the coil wire. A magnitude of the current is proportional to a velocity of the magnet and a strength of a magnetic field provided by the magnet. Conversely, a current supplied to the coil can induce a magnetic field. The magnetic field of the coil can interact with the magnetic field of the magnet to induce opposing forces on the coil wire and the magnet. Accordingly, the coil transducers can be used to convert electrical signals into a mechanical force and/or convert a mechanical velocity into an electrical signal. The magnet and the coil bobbin assembly may be referred to as coil transducer components and the mechanical force and/or velocity may be referred to as a mechanical motion.

As can be appreciated, coil transducers may need to accurately and repeatably convert the mechanical motion to/from the electrical signal. In addition, unit-to-unit consistency may be desirable for reliability in calibration, measurement, servicing, etc. For example, a current may have a substantially linear relationship with a mechanical force. However, the linearity's accuracy, repeatability, and unit-to-unit consistency may depend on the quality of the coil wire's dimensions and related features, such as coil wire spacing, insulation around the coil wire, etc.

Coil wire is wound onto a hub of the bobbin from one flange to the other in successive layers, typically two to ten layers per coil. A perfectly wound bobbin would have each successive layer offset by the wire radius allowing each layer to rest in the valley formed by adjacent loops in the previous layer. Variation from many factors including wire diameter, bobbin dimensions, wire tension and winder control accuracy combine to produce gaps and overlaps in the successive loops of wire. The outer layer of coil wire is coated with either a polymer, cement or cement/polymer mixture to restrain any loose segments of wire. Many attempts have been made to infiltrate the coils windings with polymers, cements or cement/polymer mixtures to restrain internal lengths of wire. The attempted coating methods include dipping, wet winding and applying an outer layer with a brush or knife. None of the attempted methods have resulted in uniformly filled voids between the wires through all layers of the coil.

Accordingly, there is a need for a bobbin for uniformly filled interstices between turns of a coil. Therefore, there is a need for infiltrating material into a coil.

### SUMMARY

A coil bobbin for coil infiltrating material into a coil is provided. According to an embodiment, the coil bobbin comprises a bobbin base, a bobbin lip, and a coil groove extending between the bobbin base and the bobbin lip. The coil groove includes one or more bobbin openings configured to apply a pressure differential to the coil groove.

A coil transducer including coil infiltrated material in a coil is provided. According to an embodiment, the coil transducer comprises a coil bobbin provided according to the foregoing, a coil disposed in the coil groove extending between the bobbin base and the bobbin lip, and a coil infiltrated material disposed between windings of the coil, the coil infiltrated material being substantially absent of voids.

A vibratory device is provided. According to an embodiment, the vibratory device comprises a vibratory element and a coil transducer formed according to the foregoing affixed to the vibratory element.

A method of forming a bobbin for infiltrating material into a coil is provided. According to an embodiment, the method comprises forming a bobbin base, forming a bobbin lip, forming a coil groove extending between the bobbin base and the bobbin lip, and forming one or more bobbin openings in the coil groove to allow a pressure differential to be applied to the coil groove.

A method of forming a coil assembly by infiltrating material into a coil is provided. According to an embodiment, the method comprises providing a coil bobbin according to the foregoing, wrapping a coil wire about the coil groove of the coil bobbin, and applying a pressure differential across the one or more bobbin openings in the coil groove.

A tool for infiltrating material into a coil is provided. According to an embodiment, the tool comprises a material application device configured to provide the infiltrating material to the coil at a pressure that forms a pressure differential across one or more bobbin openings of a coil groove of a coil bobbin.

A system for infiltrating material into a coil is provided. According to an embodiment, the system comprises a tool according to the foregoing and a pump configured to provide the infiltrating material to the tool at the pressure that forms a pressure differential across the one or more bobbin openings of the coil groove of the coil bobbin.

### ASPECTS

According to an aspect, a coil bobbin for coil infiltrating material into a coil comprises a bobbin base, a bobbin lip, and a coil groove extending between the bobbin base and the bobbin lip. The coil groove includes one or more bobbin openings configured to apply a pressure differential to the coil groove.

Preferably, the one or more bobbin openings being configured to apply the pressure differential to the coil groove comprises the one or more bobbin openings being configured to allow a fluid to pass to or from the coil groove.

Preferably, the one or more bobbin openings being configured to allow the fluid to pass to or from the coil groove comprises the one or more bobbin openings being configured to allow the infiltrating material to pass to or from the coil groove.

Preferably, the one or more bobbin openings being configured to allow the fluid to pass to or from the coil groove comprises the one or more bobbin openings being configured to allow a non-infiltrating material to pass to or from the coil groove.

Preferably, the non-infiltrating material comprises one of an atmospheric pressure non-infiltrating material being displaced to or from the coil groove and a non-atmospheric pressure non-infiltrating material being displaced to or from the coil groove.

Preferably, the coil groove comprises a radius that is less than a radius of the bobbin base and a radius of the bobbin lip.

Preferably, the coil groove is at least partially defined by the bobbin base and the bobbin lip.

Preferably, the one or more bobbin openings comprise through holes extending between a surface defining the coil groove and a surface defining an inner bore of the coil bobbin.

Preferably, at least one of the one or more bobbin openings comprise a slot extending between the bobbin base and the bobbin lip.

Preferably, the bobbin base further comprises at least one coil wire groove extending from an exterior of the coil bobbin to the coil groove.

According to an aspect, a coil transducer including coil infiltrated material in a coil comprises a coil bobbin provided according to the foregoing, a coil disposed in the coil groove extending between the bobbin base and the bobbin lip, and a coil infiltrated material disposed between windings of the coil, the coil infiltrated material being substantially absent of voids.

Preferably, the coil infiltrated material comprises at least one of a plastic, a cement, a rubber, an epoxy, colloidal silica, sodium silicate, silicone, and aluminum silicate.

According to an aspect, a vibratory device comprises a vibratory element and a coil transducer formed according to the foregoing affixed to the vibratory element.

According to an aspect, a method of forming a bobbin for infiltrating material into a coil comprises forming a bobbin base, forming a bobbin lip, forming a coil groove extending between the bobbin base and the bobbin lip, and forming one or more bobbin openings in the coil groove to allow a pressure differential to be applied to the coil groove.

Preferably, forming the one or more bobbin openings to allow the pressure differential to be applied to the coil groove comprises forming the one or more bobbin openings to allow a fluid to pass to or from the coil groove.

Preferably, forming the one or more bobbin openings to allow the fluid to pass to or from the coil groove comprises forming the one or more bobbin openings to allow the infiltrating material to pass to or from the coil groove.

Preferably, forming the one or more bobbin openings to allow the fluid to pass to or from the coil groove comprises forming the one or more bobbin openings to allow a non-infiltrating material to pass to or from the coil groove.

Preferably, the non-infiltrating material comprises one of an atmospheric pressure non-infiltrating material being displaced to or from the coil groove and a non-atmospheric pressure non-infiltrating material being displaced to or from the coil groove.

Preferably, the coil groove comprises a radius that is less than a radius of the bobbin base and a radius of the bobbin lip.

Preferably, the coil groove is at least partially defined by the bobbin base and the bobbin lip.

Preferably, forming the one or more bobbin openings comprises forming through holes extending between a surface defining the coil groove and a surface defining an inner bore of the coil bobbin.

Preferably, forming at least one of the one or more bobbin openings comprise forming a slot extending between the bobbin base and the bobbin lip.

Preferably, forming the bobbin base further comprises forming at least one coil wire groove extending from an exterior of the coil bobbin to the coil groove.

According to an aspect, a method of forming a coil assembly by infiltrating material into a coil comprises providing a coil bobbin according to the foregoing, wrapping a coil wire about the coil groove of the coil bobbin, and applying a pressure differential across the one or more bobbin openings in the coil groove.

Preferably, the method further comprising providing the infiltrating material to the coil wire wrapped about the coil groove of the coil bobbin.

Preferably, the pressure differential is applied by applying at least one of a negative pressure and a positive pressure to the coil wire wrapped about the coil groove of the coil bobbin.

Preferably, the at least one of the negative pressure and the positive pressure applied to the coil wire wrapped about the coil groove of the coil bobbin is applied to at least one of an external portion and an internal portion of the coil wire wrapped about the coil groove of the coil bobbin.

Preferably, the at least one of the negative pressure and the positive pressure applied to the coil wire comprises a pressure of one of the infiltrating material and a non-infiltrating material applied to the coil wire wrapped about the coil groove.

Preferably, the infiltrating material comprises at least one of a plastic, a cement, a rubber, an epoxy, colloidal silica, sodium silicate, silicone, and aluminum silicate and the non-infiltrating material comprises air.

According to an aspect, a tool for infiltrating material into a coil comprises a material application device configured to provide the infiltrating material to the coil at a pressure that forms a pressure differential across one or more bobbin openings of a coil groove of a coil bobbin.

Preferably, the material application device being configured to provide the infiltrating material to the coil comprises the material application device being configured to apply the infiltrating material to the coil.

Preferably, the pressure that induces the pressure differential across the one or more openings of the coil bobbin is greater than an atmospheric pressure.

Preferably, the material application device being configured to provide the infiltrating material to the coil comprises the material application device being configured to deposit the infiltrating material onto the coil.

Preferably, the material application device being configured to deposit the infiltrating material onto the coil comprises the material application device being configured to one of deposit the infiltrating material at one of an atmospheric pressure and a pressure that is greater than the atmospheric pressure.

Preferably, the material application device comprises one of a syringe and a nozzle.

Preferably, the material application device further comprises a sealing surface configured to provide a seal.

Preferably, the tool further comprises a vacuum application device configured to induce the pressure differential across the one or more bobbin openings of the coil groove.

Preferably, the vacuum application device comprises a sealing surface configured to provide a seal.

According to an aspect, a system for infiltrating material into a coil comprising a tool according to the foregoing and a pump configured to provide the infiltrating material to the tool at the pressure that forms a pressure differential across the one or more bobbin openings of the coil groove of the coil bobbin.

Preferably, the pump is further configured to receive the infiltrating material from the tool.

Preferably, the system further comprises a controller configured to control at least one of a flow rate and the pressure of the infiltrating material provided to the tool.

Preferably, the system further comprises a vacuum pump configured to provide a negative pressure to the tool.

### BRIEF DESCRIPTION OF THE DRAWINGS

The same reference number represents the same element on all drawings. It should be understood that the drawings are not necessarily to scale.
FIG. 1 shows a vibratory device 5 including a coil transducer coupled to a vibratory element of the vibratory device 5.
FIG. 2 shows another vibratory device 200, which, as shown, is a vibratory meter, that includes a coil transducer 220 coupled to a first and second vibratory element 210, 210' of the vibratory device 200.
FIG. 3 shows a partial perspective cross-section view of the coil transducer 220.
FIGS. 4 through 9 show perspective, plan, and cross-section views of the coil bobbin 220cb.
FIGS. 10 and 11 show perspective and plan views of an alternative coil bobbin 1020cb.
FIG. 12 shows a cross-section planar view of the coil assembly 220c where the coil bobbin 220cb and the coil wire 220cw are shown.
FIG. 13 shows a cross-section planar view of the coil assembly 220c and a system 1300 for infiltrating material into a coil by applying a pressure differential to the coil bobbin 220cb and the coil wire 220cw.
FIG. 14 shows an alternative example of a tool 1450 in a system 1400 for infiltrating material into a coil.
FIG. 15 shows another alternative example of a tool 1550 in a system 1500 for infiltrating material into a coil.
FIG. 16 shows a method 1600 of forming a coil bobbin for infiltrating material into a coil.
FIG. 17 shows a method 1700 of forming a coil assembly by infiltrating material into a coil.

### DETAILED DESCRIPTION

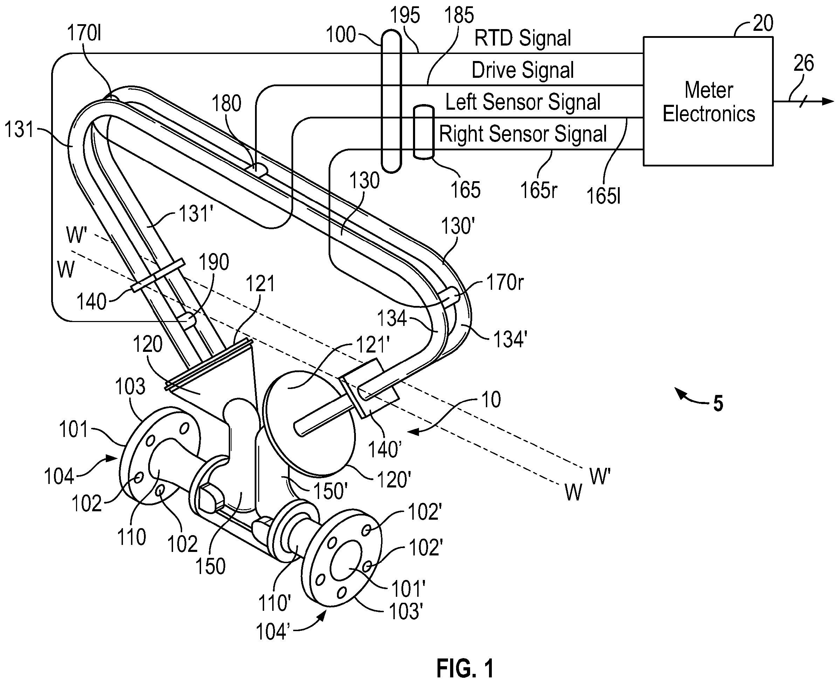

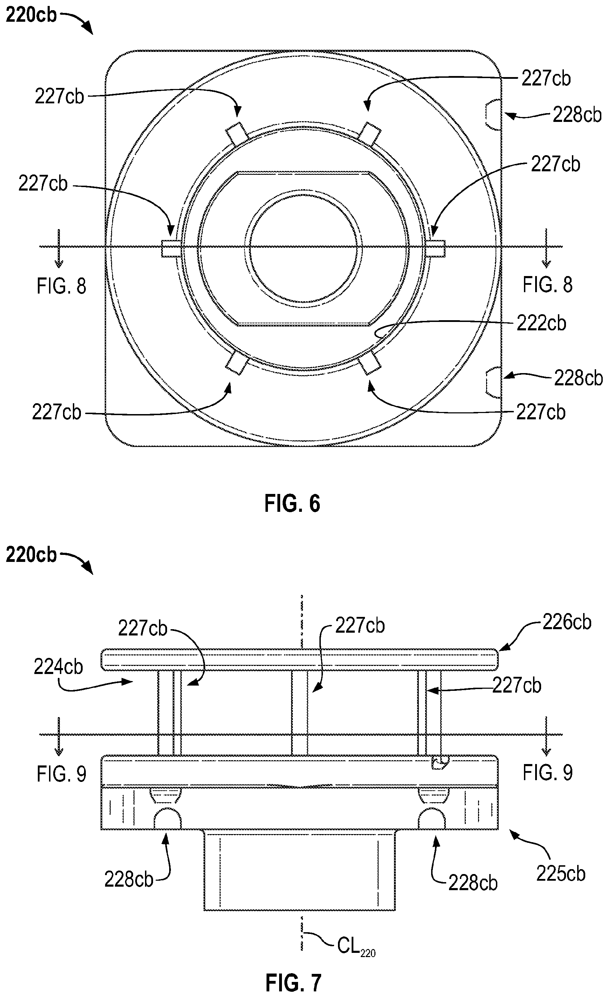

FIGS. 1 - 17 and the following description depict specific examples to teach those skilled in the art how to make and use the best mode of embodiments of infiltrating material into a coil. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of infiltrating the material into the coil. As a result, the embodiments described below are not limited to the specific examples described below, but only by the claims and their equivalents.

**FIG. 1** shows a vibratory device 5 including a coil transducer coupled to a vibratory element of the vibratory device 5. As shown in FIG. 1, the vibratory device 5 is a vibratory meter comprising a sensor assembly 10 and meter electronics 20, although any suitable vibratory device, vibratory elements, electronics, and/or arrangements may be employed. As shown in FIG. 1, the sensor assembly 10 responds to mass flow rate and density of a process material. The meter electronics 20 is connected to the sensor assembly 10 via leads 100 to provide density, mass flow rate, and temperature information over port 26, as well as other information.

The sensor assembly 10 includes a pair of manifolds 150 and 150', flanges 103 and 103' having flange necks 110 and 110', a pair of parallel conduits 130 and 130', driver 180, resistive temperature detector (RTD) 190, and a pair of pick-off sensors 170l and 170r. The conduits 130, 130' are vibratory elements and the driver 180 and pick-off sensors 170l, 170r are transducers. Conduits 130 and 130' have two essentially straight inlet legs 131, 131' and outlet legs 134, 134', which converge towards each other at conduit mounting blocks 120 and 120'. The conduits 130, 130' bend at two symmetrical locations along their length and are essentially parallel throughout their length. Brace bars 140 and 140' serve to define the axis W and W' about which each conduit 130, 130' oscillates. The legs 131, 131' and 134, 134' of the conduits 130, 130' are fixedly attached to conduit mounting blocks 120 and 120' and these blocks, in turn, are fixedly attached to manifolds 150 and 150'. This provides a continuous closed material path through sensor assembly 10.

When flanges 103 and 103', having holes 102 and 102' are connected, via inlet end 104 and outlet end 104' into a process line (not shown) which carries the process material that is being measured, material enters inlet end 104 of the meter through an orifice 101 in the flange 103 and is conducted through the manifold 150 to the conduit mounting block 120 having a surface 121. Within the manifold 150 the material is divided and routed through the conduits 130, 130'. Upon exiting the conduits 130, 130', the process material is recombined in a single stream within the block 120' having a surface 121' and the manifold 150' and is thereafter routed to outlet end 104' connected by the flange 103' having holes 102' to the process line (not shown).

The conduits 130, 130' are selected and appropriately mounted to the conduit mounting blocks 120, 120' so as to have substantially the same mass distribution, moments of inertia and Young's modulus about bending axes W--W and W'--W', respectively. These bending axes go through the brace bars 140, 140'. Inasmuch as the Young's modulus of the conduits change with temperature, and this change affects the calculation of flow and density, RTD 190 is mounted to conduit 130' to continuously measure the temperature of the conduit 130'. The temperature of the conduit 130' and hence the voltage appearing across the RTD 190 for a given current passing therethrough is governed by the temperature of the material passing through the conduit 130'. The temperature dependent voltage appearing across the RTD 190 is used in a well-known method by the meter electronics 20 to compensate for the change in elastic modulus of the conduits 130, 130' due to any changes in conduit temperature. The RTD 190 is connected to the meter electronics 20 by lead 195.

Both of the conduits 130, 130' are driven by driver 180 in opposite directions about their respective bending axes W and W' and at what is termed the first out-of-phase bending mode of the vibratory meter. This driver 180 may comprise any one of many well-known arrangements, such as a magnet mounted to the conduit 130' and an opposing coil mounted to the conduit 130 and through which an alternating current is passed for vibrating both conduits 130, 130'. A suitable drive signal 185 is applied by the meter electronics 20, via a lead, to the driver 180. Accordingly, the vibratory device 5 or, more particularly, the sensor assembly 10, may be viewed as a symmetrically balanced vibratory device.

The meter electronics 20 receives the RTD temperature signal on lead 195, and sensor signals 165 appearing on leads 100 carrying left and right sensor signals 165l, 165r, respectively. The meter electronics 20 produces the drive signal 185 appearing on the lead to driver 180 and vibrate conduits 130, 130'. The meter electronics 20 processes the left and right sensor signals 165l, 165r and the lead 195 carrying an RTD signal to compute the mass flow rate and the density of the material passing through sensor assembly 10. This information, along with other information, is applied by meter electronics 20 over port 26 as a signal.

As discussed above, the sensor assembly 10 includes the driver 180 and the pair of pick-off sensors 170l and 170r. The driver 180 and pick-off sensors 170l and 170r can be transducers with transducer components. In particular, the driver 180 and the pick-off sensors 170l, 170r can be coil transducers comprising a coil bobbin assembly and a magnet that are coupled to the conduits 130, 130'.

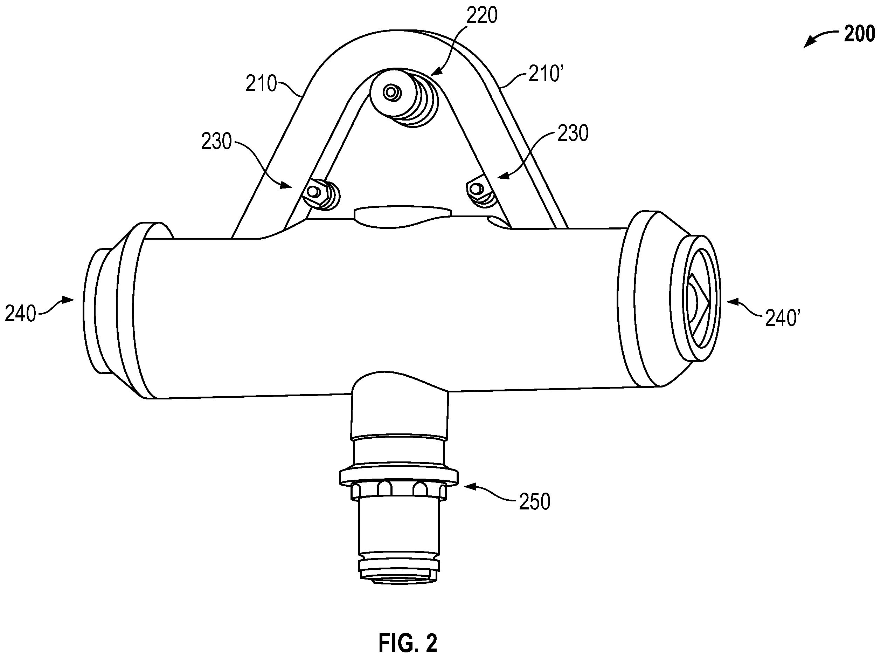

**FIG. 2** shows another vibratory device 200, which, as shown, is a vibratory meter, that includes a coil transducer 220 coupled to a first and second vibratory element 210, 210' of the vibratory device 200. As shown in FIG. 2, the vibratory device 200 includes the first and second vibratory element 210, 210', which are shown as conduits similar, but with a triangle bend, to the conduits 130, 130' discussed above with reference to FIG. 1. The vibratory device 200 also includes the coil transducer 220 that is coupled to the first and second vibratory element 210, 210'. The coil transducer 220 may be the same as or similar to the driver 180 discussed above with reference to FIG. 1. However, the coil transducer 220 or alternative transducer assemblies may be employed as pick off sensors. As shown in FIG. 2, the vibratory device 200 includes pickoff sensors 230 that are coupled to the first and second vibratory element 210, 210'. The pickoff sensors 230 may be similar to the pickoff sensors 170l, 170r discussed above with reference to FIG. 1. The vibratory device 200 also includes inlet and outlet manifolds 240, 240' and a feedthrough 250. The feedthrough 250 may be mechanically and communicatively coupled to an interface housing a meter electronics the same as or similar to the meter electronics 20 discussed above. As is described in more detail in the following, the coil transducer 220 may be formed by infiltrating material into a coil of the coil transducer 220.

### Coil transducer including a coil bobbin for infiltrating material

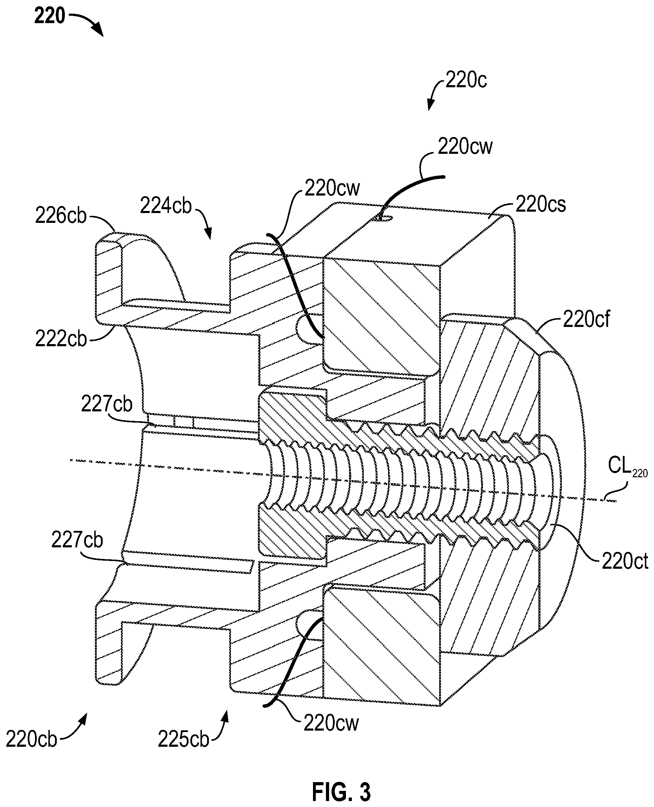

**FIG. 3** shows a partial perspective cross-section view of the coil transducer 220. As shown in FIG. 3, the coil transducer 220 is comprised of a coil assembly 220c where a corresponding magnet assembly is not shown for clarity. The coil assembly 220c is comprised of a spacer 220cs that is mechanically coupled to a coil bobbin 220cb. With more particularity, the coil bobbin 220cb is shown as mechanically coupled to the spacer 220cs via a bolt 220ct threaded into a threaded washer 220cf. The bolt 220ct includes an internal threaded portion for mounting the coil transducer 220 to one of the conduits 130, 130'. The bolt 220ct and the threaded washer 220cf apply a compressive force, such as a coaxial and/or interface compressive force, to the coil bobbin 220cb and the spacer 220cs. Accordingly, the bolt 220ct extends through a smooth bolt hole of the coil bobbin 220cb into a threaded hole of the threaded washer 220cf. The coil bobbin 220cb and the spacer 220cs are symmetrically disposed about a coil transducer centerline CL₂₂₀, which may be a longitudinal axis of the coil transducer 220. Although not shown, a threaded mounting post may be inserted into the internal threaded portion of the bolt 220ct to mount the coil transducer 220 to the conduits 130, 130'.

The spacer 220cs is configured to mount to a movable element such as, for example, the first and second vibratory element 210, 210' described above, although any suitable movable element may be employed. The spacer 220cs may be mounted to the movable element using any suitable means, such as, for example, welding, brazing, fastening means, clamps, and/or the like. The spacer 220cs may be substantially rigidly mounted to the movable element. The spacer 220cs may therefore be configured to move in concert with the movable element. As can be appreciated, due to the coil bobbin 220cb being coupled with the spacer 220cs, the coil bobbin 220cb also moves in concert with the movable element.

The coil bobbin 220cb has a substantially cylindrical shape. More specifically, the coil bobbin 220cb is symmetrical about the coil transducer centerline CL₂₂₀. The coil bobbin 220cb is comprised of a distal end and a proximate end relative to the spacer 220cs. That is, the distal end is furthest from the spacer 220cs, and the proximate end is the closest to the spacer 220cs. The coil bobbin 220cb includes an inner bore 222cb that is open at the distal end of the coil bobbin 220cb. The inner bore 222cb is defined by an inner cylindrical surface of the coil bobbin 220cb. The coil bobbin 220cb also includes a coil groove 224cb that extends from the proximate end to the distal end of the coil bobbin 220cb. The coil groove 224cb is defined by a U-shaped surface that extends circumferentially about the coil bobbin 220cb. A plurality of bobbin openings 227cb extend through the coil bobbin 220cb between the U-shaped surface defining the coil groove 224cb and the inner cylindrical surface defining the inner bore 222cb.

The bobbin openings 227cb are shown as having columnar shaped slots that extend between the proximate end and the distal end of the coil bobbin 220cb, although any suitable shape may be employed. For example, rather than slots, the bobbin openings 227cb may be comprised of circular or other geometric shapes, curves, variable width openings, and/or the like. As shown in FIG. 3, the columnar shaped slots are parallel to the coil transducer centerline CL₂₂₀ and extend entirely to the distal end of the coil bobbin 220cb. Also, the plurality of bobbin openings 227cb are spaced apart from each other at regular intervals.

As shown in FIG. 3, the coil transducer 220 includes a coil wire 220cw that (although not shown) is wrapped around the coil groove 224cb of the coil bobbin 220cb. Also not shown in FIG. 3 is a magnet assembly that constructively interfaces with the coil assembly 220c. The magnet assembly may be comprised of a magnet keeper and a magnet. The magnet keeper may be configured to hold the magnet such that the magnet extends into an inner bore 222cb of the coil bobbin 220cb as the magnet assembly moves along a magnet assembly translation path that may be collinear with the coil transducer centerline CL₂₂₀. The magnet assembly translation path may also be substantially coaxial with a longitudinal axis of the coil bobbin 220cb which may also be collinear with the coil transducer centerline CL₂₂₀. The coil wire 220cw being wrapped around the coil groove 224cb forms a coil 220cc that is used to transduce between an electrical signal and a magnetic field.

As will be described in more detail in the following, a pressure differential may be applied across the plurality of bobbin openings 227cb to apply a pressure to infiltrating material impinging on the windings of the coil wire 220cw. The pressure differential applied to the infiltrating material can force the infiltrating material flow between interstitial spaces or interstices of the windings of the coil wire 220cw. Accordingly, the infiltrating material may flow and settle in the interstitial spaces between the windings of the coil 220cc. As is described in more detail in the following, the infiltrating material may be "pushed" and/or "pulled" by the pressure differential applied across the plurality of bobbin openings 227cb and the infiltrating material may or may not traverse the plurality of bobbin openings 227cb. Accordingly, the pressure differential may be applied to infiltrating material impinging on the outermost windings of the coil wire 220cw or the innermost windings of the coil wire 220cw.

### Coil bobbin for infiltrating material into a coil

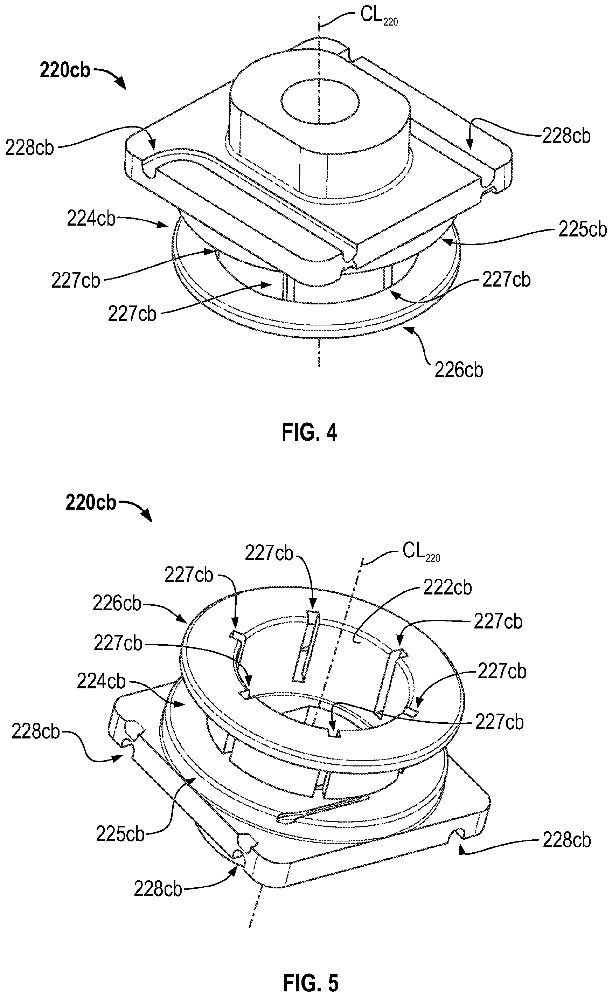

**FIGS. 4 through 9** show perspective, plan, and cross-section views of the coil bobbin 220cb. As shown in FIGS. 4 through 9, the coil bobbin 220cb includes the inner bore 222cb and the coil groove 224cb. The coil groove 224cb is defined in part by the bobbin base 225cb and the bobbin lip 226cb. In addition, the coil groove 224cb is defined by a surface extending between the bobbin base 225cb and the bobbin lip 226cb. The coil bobbin 220cb or more particularly the coil groove 224cb includes the plurality of bobbin openings 227cb. As can be appreciated, the bobbin openings 227cb have a longitudinal and linear profile that extends from the bobbin base 225cb to the bobbin lip 226cb parallel to the coil transducer centerline CL₂₂₀. The plurality of bobbin openings 227cb also extend between a surface of the coil groove 224cb and a surface of the inner bore 222cb through the coil bobbin 220cb.

As can also be seen in FIGS. 4 through 9, the plurality of the bobbin openings 227cb are symmetrically disposed at regular intervals about the coil transducer centerline CL₂₂₀. With more particularity, the plurality of the bobbin openings 227cb include a longitudinal length that is parallel to and disposed equidistant from the coil transducer centerline CL₂₂₀. The plurality of the bobbin openings 227cb are also disposed equidistant from an adjacent other bobbin openings 227cb. That is, the plurality of bobbin openings 227cb are equally spaced from each other at a circumferential distance orthogonal to the coil transducer centerline CL₂₂₀ along the surface defining the coil groove 224cb. As can also be appreciated from FIGS. 4 through 9, there are six equally spaced bobbin openings 227cb that extend between the inner bore 222cb and the coil groove 224cb although any suitable quantity and/or arrangement may be employed. Additionally, or alternatively, other bobbin openings may have different shapes, locations, etc. For example, other bobbin openings may be comprised of curves, waves, corners at the side profile and/or through the bobbin and/or have one or more of various geometric cross-section openings. For example, as shown in FIGS. 4 through 9, the bobbin openings 227cb are illustrated as having a circumferential profile of a plane extending parallel to the coil transducer centerline CL₂₂₀ and a rectangular cross-section opening extending collinear with a radius extending orthogonal from the coil transducer centerline CL₂₂₀, although any suitable bobbin openings may be employed.

As can be appreciated from FIGS. 4 through 9, the coil bobbin 220cb is substantially symmetrical about an axis. For example, the coil bobbin 220cb has a body that is substantially symmetric about the coil transducer centerline CL₂₂₀. With more particularity, the inner bore 222cb, coil groove 224cb, bobbin base 225cb, and bobbin lip 226cb have cylindrical shapes that are disposed about the coil transducer centerline CL₂₂₀. That is, the inner bore 222cb and the bobbin base 225cb are shown as defined by a surface that is a cylinder about the coil transducer centerline CL₂₂₀. Similarly, the bobbin base 225cb and the bobbin lip 226cb have annular bodies disposed about the coil transducer centerline CL₂₂₀. As can also be seen in FIGS. 4 through 9, the coil bobbin 220cb also includes a coil wire groove 228cb that is configured to receive and contain the coil wire 220cw shown in FIG. 3. As shown in FIGS. 4 through 9, the coil wire groove 228cb has a semicircular cross-section that extends from one side of the coil bobbin 220cb to another side of the coil bobbin 220cb. Two coil wire groove 228cb shown. As can be appreciated, one of the coil wire grooves 228cb may be referred to as an ingress coil wire groove 228cb and the other of the coil wire groove 228cb may be referred to as an egress coil wire groove 228cb. As can be appreciated, alternative coil bobbins for infiltrating material into a coil may be employed, one of which is described below.

### Alternative coil bobbin for infiltrating material into a coil

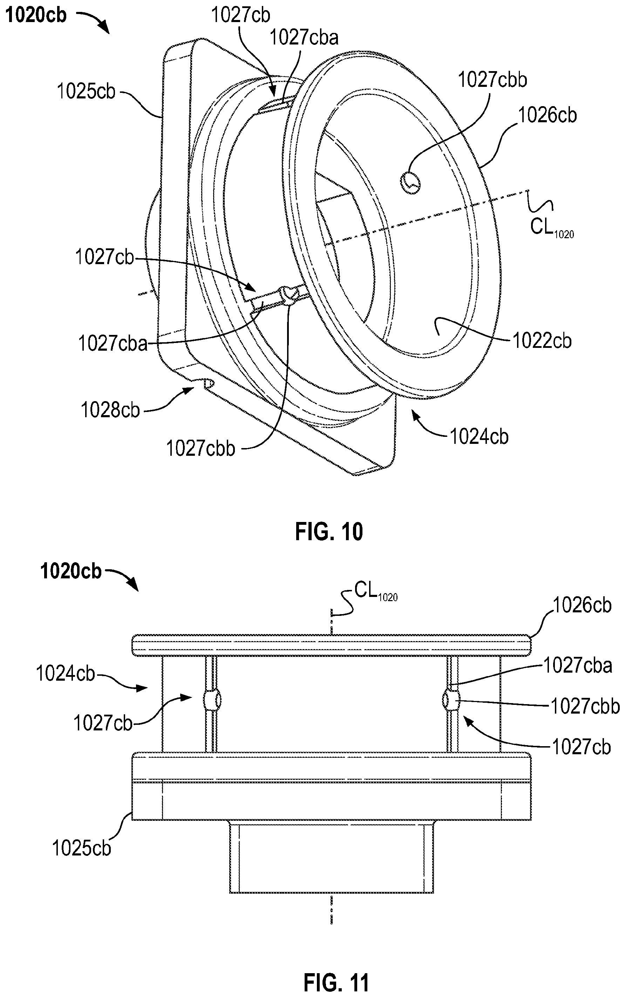

**FIGS. 10 and 11** show perspective and plan views of an alternative coil bobbin 1020cb. The alternative coil bobbin 1020cb may be employed in a coil transducer similar to the coil transducer 220 described above. Accordingly, the coil transducer including the alternative bobbin 1020cb may be wound with the coil wire 220cw. As shown in FIGS. 10 and 11, the coil bobbin 1020cb includes an inner bore 1022cb (FIG. 10) and a coil groove 1024cb. The coil groove 1024cb is defined in part by a bobbin base 1025cb and a bobbin lip 1026cb. In addition, the coil groove 1024cb is defined by a surface extending between the bobbin base 1025cb and the bobbin lip 1026cb. The coil bobbin 1020cb or more particularly the coil groove 1024cb includes the plurality of bobbin openings 1027cb. As can be appreciated, the bobbin openings 1027cb have a longitudinal and linear profile that extends from the bobbin base 1025cb to the bobbin lip 1026cb parallel to the coil transducer centerline CL₁₀₂₀. The plurality of bobbin openings 1027cb also extend between a surface of the coil groove 1024cb and a surface of the inner bore 1022cb through the coil bobbin 1020cb. With more particularity, as shown in FIGS. 10 and 11, each of the bobbin openings 1027cb are comprised of an opening groove 1027cba and an opening through hole 1027cbb. The opening groove 1027cba has a longitudinal and linear profile that extends from the bobbin base 1025cb to the bobbin lip 1026cb. The opening through hole 1027cbb extends between the surface of the coil groove 1024cb and the surface of the inner bore 1022cb through the coil bobbin 1020cb.

As can also be seen in FIGS. 10 and11, the plurality of the bobbin openings 1027cb are symmetrically disposed at regular intervals about the coil transducer centerline CL₁₀₂₀. With more particularity, the plurality of the bobbin openings 1027cb include a longitudinal length that is parallel to and disposed equidistant from the coil transducer centerline CL₁₀₂₀. The plurality of the bobbin openings 1027cb are also disposed equidistant from an adjacent other bobbin openings 1027cb. That is, the plurality of bobbin openings 1027cb are equally spaced from each other at a circumferential distance orthogonal to the coil transducer centerline CL₁₀₂₀ along the surface defining the coil groove 1024cb. As can also be appreciated from FIGS. 10 and 11, there are four equally spaced bobbin openings 1027cb that extend between the inner bore 1022cb and the coil groove 1024cb although any suitable quantity and/or arrangement may be employed. Additionally, or alternatively, other bobbin openings may have different shapes, locations, etc. For example, other bobbin openings may be comprised of curves, waves, corners at the side profile and/or through the bobbin and/or have one or more of various geometric cross-section openings. For example, as shown in FIGS. 10 and 11, the bobbin openings 1027cb, or more particularly, the opening grooves 1027cba, are illustrated as having a circumferential profile of a plane extending parallel to the coil transducer centerline CL₁₀₂₀ and a rectangular cross-section opening extending collinear with a radius extending orthogonal from the coil transducer centerline CL₁₀₂₀, although any suitable bobbin openings may be employed.

As can be appreciated from FIGS. 10 and 11, the coil bobbin 1020cb is substantially symmetrical about an axis. For example, the coil bobbin 1020cb has a body that is substantially symmetric about the coil transducer centerline CL₁₀₂₀. With more particularity, the inner bore 1022cb, coil groove 1024cb, bobbin base 1025cb, and bobbin lip 1026cb have cylindrical shapes that are disposed about the coil transducer centerline CL₁₀₂₀. That is, the inner bore 1022cb and the bobbin base 1025cb are shown as defined by a surface that is a cylinder about the coil transducer centerline CL₁₀₂₀. Similarly, the bobbin base 1025cb and the bobbin lip 1026cb have annular bodies disposed about the coil transducer centerline CL₁₀₂₀. As can also be seen in FIGS. 10 and 11, the coil bobbin 1020cb also includes a coil wire groove 1028cb that is configured to receive and contain the coil wire 220cw shown in FIG. 3. As shown in FIGS. 10 and 11, the coil wire groove 1028cb has a semicircular cross-section that extends from one side of the coil bobbin 1020cb to another side of the coil bobbin 1020cb. One coil wire groove 1028cb is shown.

As can be appreciated from the foregoing discussion of the coil bobbins 220cb, 1020cb, a machine, tool, person, and/or the like may place the coil wire 220cw in the coil wire groove 228cb, 1028cb and wind the coil wire 220cw about the coil groove 224cb, 1024cb to form the coil, such as coil 220cc, with interstices filled with the infiltrating material. For example, referring to FIGS. 10 and 11, infiltrating material can flow between the inner bore 1022cb and the surface of the coil groove 1024cb. By way of illustration, an infiltrating material could be applied via the inner bore 1022cb to a plurality of the opening through hole 1027cbb by a tool. The infiltrating material could flow from the tool and/or the surface of the inner bore 1022cb, through the coil bobbin 1020cb, and into the opening groove 1027cba. The infiltrating material could flow into and at least partially fill the opening groove 1027cba and/or into a coil (not shown) disposed in the coil groove 1024cb. The tool may be a circular cylindrical tool with two common O-rings inserted into the inner bore 1022cb, seal against the inner bore 1022cb and flow the infiltrating material into the coil groove 1024cb. The infiltrating material could then flow along the opening groove 1027cba and into the coil (not shown). The O-rings on the circular cylindrical tool could seal the inner bore 1022cb on the bobbin base 1025cb side of the bobbin openings 1027cb and on the lip side 1026cb of the bobbin openings 1027cb. The O-rings may each be symmetrical about the coil transducer centerline CL₁₀₂₀ and may have a diameter slightly greater than that of the inner bore 1022cb. The outer diameter of the tool may be slightly less than that of the inner bore 1022cb to allow priming of the volume between the O-rings.

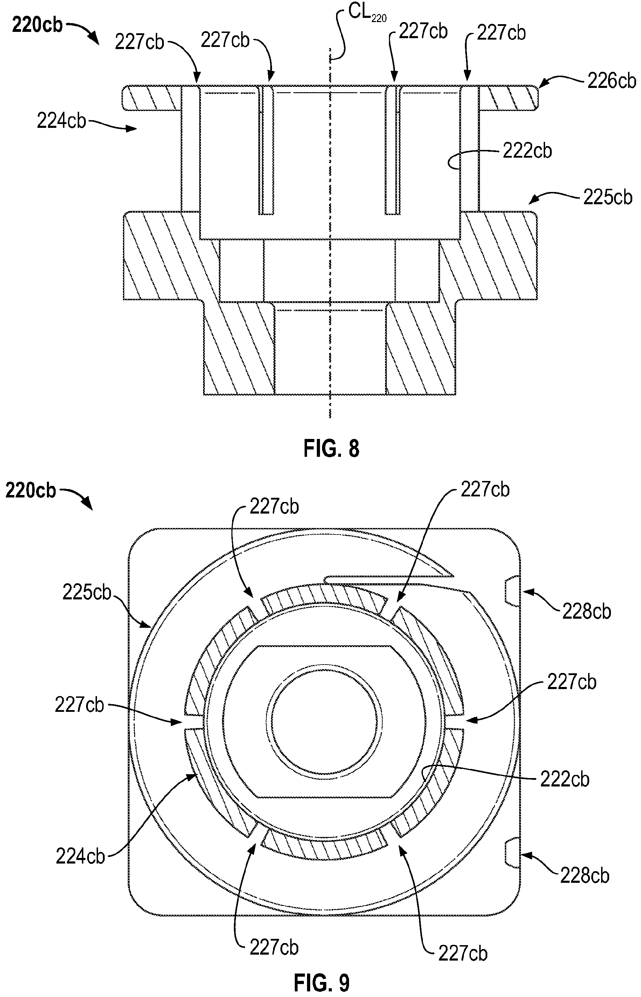

Tools and methods that can be used to infiltrate material into a coil are described in the following, where the coil bobbin 220cb described with reference to FIGS. 4 and 9 serves as an exemplary coil bobbin for infiltrating material into a coil.

### Coil with infiltrated material

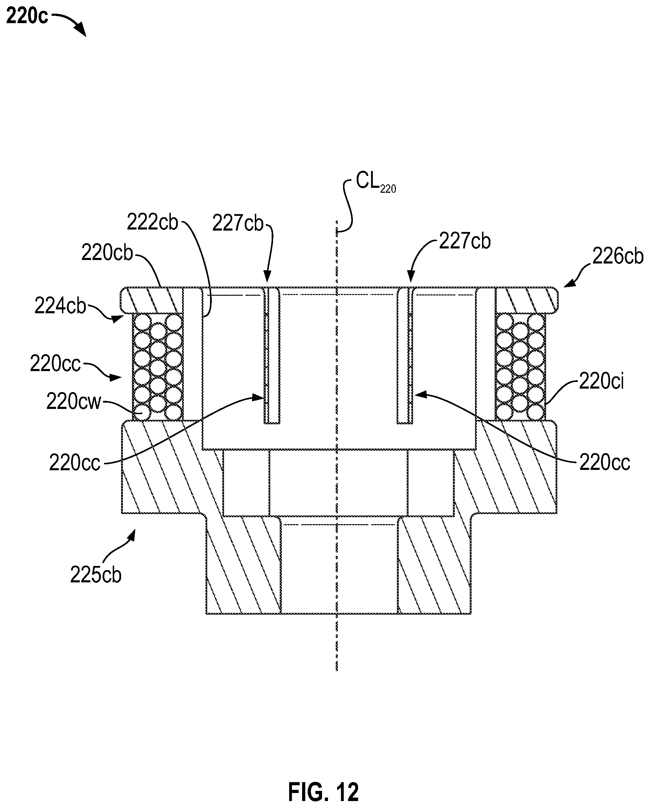

**FIG. 12** shows a cross-section planar view of the coil assembly 220c where the coil bobbin 220cb and the coil wire 220cw are shown. As shown in FIG. 12, the coil bobbin 220cb includes the inner bore 222cb and the coil groove 224cb. The coil groove 224cb is defined in part by the bobbin base 225cb and the bobbin lip 226cb. In addition, the coil groove 224cb is defined by a surface extending between the bobbin base 225cb and the bobbin lip 226cb. The coil bobbin 220cb or more particularly the coil groove 224cb includes a plurality of bobbin openings 227cb. As can be appreciated, the bobbin openings 227cb have a longitudinal and linear profile that extends from the bobbin base 225cb to the bobbin lip 226cb. The plurality of bobbin openings 227cb also extend between the surface of the coil groove 224cb and the surface of the inner bore 222cb through the coil bobbin 220cb. Although not shown in FIG. 12, the coil bobbin 220cb includes the coil wire grooves 228cb (see FIG. 4) that are configured to receive and contain the coil wire 220cw shown in FIG. 3. As shown in FIG. 12, the coil wire 220cw is wrapped around the coil groove 224cb to form a coil 220cc and includes interstitial spaces or interstices that are substantially (e.g., at or nearly entirely, completely, etc.) filled with a coil infiltrated material 220ci. Although not shown in FIG. 12, the alternative coil bobbin 1020cb may be employed in an alternative coil assembly that is similar to the coil assembly 220c. Accordingly, the coil wire 220cw may be wrapped around the coil groove 1024cb to form the coil 220cc and may include interstitial spaces or interstices that are substantially (e.g., at or nearly entirely, completely, etc.) filled with the coil infiltrated material 220ci.

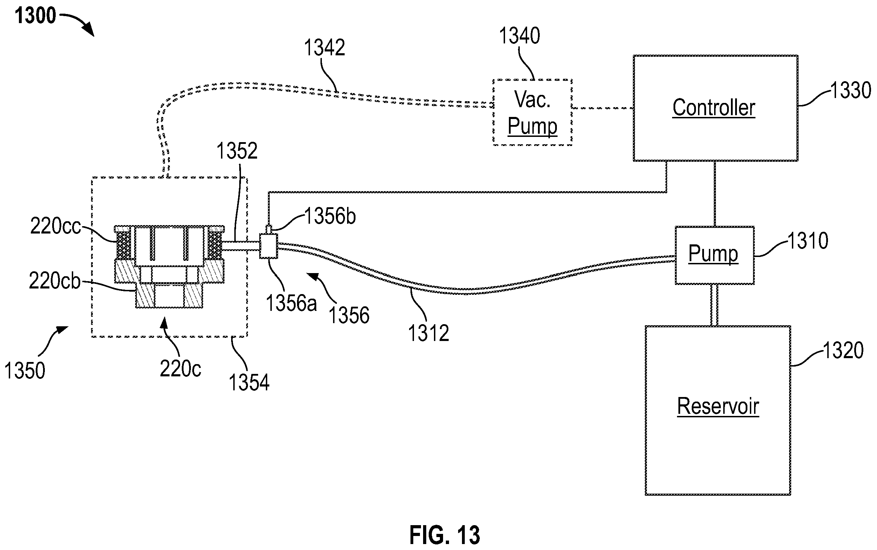

As will be described in more detail in the following with reference to FIGS. 13 through 15, the coil infiltrated material 220ci may be forced between the windings of the coil wire 220cw by employing a pressure differential across the plurality of bobbin openings 227cb. The pressure differential may be between an outer region or portion of the coil 220cc and the inner bore 222cb, although any suitable pressure differential may be employed. For example, a pressure differential may be applied between a location proximate to the coil groove 224cb and the inner bore 222cb as the coil wire 220cw is first turned about the coil groove 224cb and then subsequently applied between locations radially spaced from the coil groove 224cb and the inner bore 222cb. The pressure differential may be due to the coil infiltrated material 220ci being applied to the coil 220cc or the inner bore 222cb at a pressure greater than atmosphere, a vacuum being applied to the inner bore 222cb or coil 220cc, and/or the like, as the following explains in more detail.

### System and tool

**FIG. 13** shows a cross-section planar view of the coil assembly 220c and a system 1300 for infiltrating material into a coil by applying a pressure differential to the coil bobbin 220cb and the coil wire 220cw. As shown in FIG. 13, the coil assembly 220c is partially depicted where only the coil bobbin 220cb and the coil 220cc are shown. As shown in FIG. 13, the system 1300 is comprised of a pump 1310 that is fluidly coupled to a reservoir 1320. The pump 1310 is also communicatively coupled to a controller 1330. The controller 1330 is also shown as being communicatively coupled to a vacuum pump 1340. The vacuum pump 1340 is shown with dashed lines to illustrate that it is optional for the system 1300, which may or may not utilize an active vacuum to assist in inducing a pressure differential on the coil assembly 220c. The pump 1310 and the vacuum pump 1340 are illustrated as being fluidly coupled to a tool 1350 for applying an infiltration material to the coil assembly 220c.

The pump 1310 may be any pump suitable for pumping one or more materials to and/or from the tool 1350 via a material line 1312. For example, the material pumped by the pump 1310 may be an infiltrating material that is pumped to the tool 1350. Accordingly, the pump 1310 may be a pump suitable for pumping the infiltrating material, which may solidify when, for example, exposed to atmosphere. In this example, the pump 1310 may be a pressure-controlled container that applies a pressure to the exterior of a mass of the infiltrating material. As can be appreciated, the one or more materials provided by the pump 1310 may or may not be the infiltrating material. By way of illustration, the pump 1310 may provide two, for example, resins to the tool 1350 which are then mixed together to form the infiltrating material. In either case, the pump 1310 may provide the infiltrating material to a tool, such as the tool 1350 shown in FIG. 13.

The reservoir 1320 may be one or more containers, pipelines, and/or the like, that may provide the one or more materials to the tool 1350. For example, the reservoir 1320 may be comprised of a disposable bag this is disposed inside the pump 1310 that applies the above-described pressure to the infiltrating material via the disposable bag. As can be appreciated, other embodiments may be employed. For example, the reservoir 1320 may provide the one or more materials to a channel comprised of electroactive material that undulates to apply a pressure to the one or more materials. As can be appreciated, the pump 1310 and the reservoir 1320 can be combined in a partially or fully integrated manner. For example, the pump 1310 may surround and/or apply a pressure to the reservoir 1320 so as to force the one or more materials to extrude to the tool 1350. Additionally, or alternatively, the pump 1310 and/or reservoir 1320 may be integrated into the tool 1350.

The tool 1350 is shown as being comprised of a material application device 1352 in proximity to the coil assembly 220c or, with more particularity, the coil 220cc (see also FIG. 12). As can be appreciated, the coil 220cc is disposed in the coil groove 224cb (see FIG. 12) of the coil bobbin 220cb. As shown in FIG. 13, the material application device 1352 is a nozzle that dispenses the infiltrating material onto the coil 220cc at atmospheric pressure. The material application device 1352 is shown as being mechanically coupled to a manifold 1356, which is comprised of a body 1356a and one or more transducers 1356b. The manifold 1356, or more particularly the body 1356a and one or more transducers 1356b, are configured to fluidly couple with the pump 1310 and communicatively coupled to the controller 1330.

The optional vacuum pump 1340 may be configured to provide a negative pressure to the tool 1350 via a vacuum line 1342 to an optional vacuum application device 1354. The term "negative pressure" may be interpreted as a pressure less than a pressure of the infiltrating material being provided by the tool 1350, although any suitable definition may be employed. For example, the term "negative pressure" may mean a pressure that is less than an atmospheric pressure. Additional or alternative to the vacuum pump 1340, the negative pressure may be applied by any suitable means that does not involve the vacuum pump 1340.

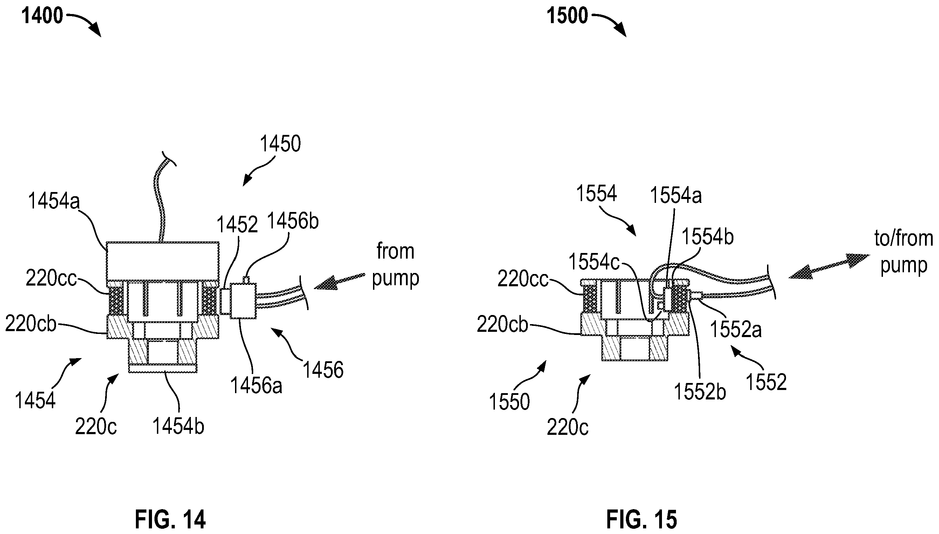

As discussed above, the pressure differential may be applied across a radial portion of the coil bobbin 220cb in various ways, which may require a particular configuration of a tool. The pressure differential may be a pressure differential sufficient to induce the infiltrating material to flow through a coil, such as the coil 220cc described above. The pressure differential value may be selected to ensure that the infiltrating material flows between the windings or the interstitials of the coil wire 220cw while also not inducing, for example, cavitation. The pressure differential may be applied across a radial distance of the entire coil, a portion of the radial distance of the coil, along the entire or a portion of a longitudinal distance of the coil, during and/or after the coil wire 220cw is wound about the coil bobbin 220cb, and/or the like. The following describes two examples with reference to FIGS. 14 and 15, although any suitable tool may be employed.

**FIG. 14** shows an alternative example of a tool 1450 in a system 1400 for infiltrating material into a coil. Although not shown in FIG. 14, the system 1400 may include the pump 1310, reservoir 1320, controller 1330, and/or the vacuum pump 1340 shown in FIG. 13. As shown in FIG. 14, the coil assembly 220c described above is employed, although any suitable coil assembly may be employed. The tool 1450 is shown as being comprised of a material application device 1452 in proximity to the coil assembly 220c or, with more particularity, the coil 220cc. As can be appreciated, the coil 220cc is disposed in the coil groove 224cb (see FIG. 12) of the coil bobbin 220cb. As shown in FIG. 14, the material application device 1452 is a nozzle that dispenses the infiltrating material onto the coil 220cc at atmospheric pressure. Accordingly, the tool 1450 also includes a vacuum application device 1454 comprising a housing 1454a and a sealing surface 1454b to provide a negative pressure to an inner bore 222cb (see FIG. 12) of the coil bobbin 220cb. The material application device 1452 is shown as being mechanically coupled to a manifold 1456, which is comprised of a body 1456a and one or more transducers 1456b. The manifold 1456, or more particularly the body 1456a and one or more transducers 1456b, are configured to fluidly couple with a pump and is electrically coupled to a controller, such as, for example, the pump 1310 and the controller 1330 described with reference to FIG. 13.

As shown in FIG. 14, the manifold 1456 is configured to receive two materials from the pump, although more or fewer lines and materials may be employed. The two materials may be, for example, resins that react together to form a hardened material such as an epoxy. Accordingly, the manifold 1456 may include a mixer (not shown) configured to mix the two resins into an infiltrating material. The infiltrating material may be provided to the material application device 1452. As can be appreciated, properties of the infiltrating material may depend on the ratios of the two materials, a temperature at which the two materials are mixed, a pressure of the two materials, etc. Accordingly, the one or more transducers 1456b may be configured to transduce one or more properties of at least one of the two materials into a signal and provide the signal representative of the one or more properties to the controller, which can perform various calculations. As can be appreciated, any combination of materials comprising plastic, a cement, a rubber, an epoxy, colloidal silica, sodium silicate, silicone, aluminum silicate (e.g., a hydrated aluminum silicate crystalline mineral such as Kaolin) and/or the like, may be employed.

In the embodiment of FIG. 14, the vacuum application device 1454 may induce a pressure differential on the coil 220cc. The pressure differential may be between an atmospheric pressure external to the coil assembly 220c and a negative pressure, or a pressure less than atmosphere, applied by the vacuum application device 1454 to the internal bore 222cb (see FIG. 12) of the coil bobbin 220cb. Accordingly, the infiltrating material applied by the material application device 1452 to the coil 220cc may flow between each coil wire turn of the coil 220cc. As can be appreciated, the negative pressure may be applied after the infiltrating material is applied to the coil 220cc. For example, the material application device 1452 and/or the coil assembly 220c may be rotated relative to each other, for example, about the coil transducer centerline CL₂₂₀ (see FIG. 12), so that the material application device 1452 can provide the infiltrating material in a substantially uniform manner. After the infiltrating material is provided, the vacuum application device 1454 may apply the negative pressure to uniformly draw the infiltrating material through the coil wire windings of the coil 220cc. Additionally, or alternatively, the material application device 1452 could have an annular body that surrounds the coil 220cc thereby allowing the infiltrating material to be uniformly applied to the coil assembly 220c, with or without the material application device 1452 and/or coil assembly 220c being rotated.

**FIG. 15** shows another alternative example of a tool 1550 in a system 1500 for infiltrating material into a coil. Although not shown in FIG. 14, the system 1500 may include the pump 1310, reservoir 1320, controller 1330, and/or the vacuum pump 1340 shown in FIG. 13. As shown in FIG. 15, the coil assembly 220c described above is employed, although any suitable coil assembly may be employed. The tool 1550 is shown as being comprised of a material application device 1552 that is in proximity to the coil assembly 220c or, with more particularity, the coil 220cc. As can be appreciated, the coil 220cc is disposed in the coil groove 224cb (see FIG. 12) of the coil bobbin 220cb. As shown in FIG. 15, the material application device 1552 dispenses infiltrating material onto the coil 220cc at a pressure that may be greater than atmosphere. Accordingly, the material application device 1552 is shown as being comprised of one or more nozzles 1552a and a sealing member 1552b. The tool 1550 also includes a vacuum application device 1554 comprising a housing 1554a and a sealing surface 1554b to provide a negative pressure to an inner bore 222cb (see FIG. 12) of the coil bobbin 220cb. The vacuum application device 1554 is also shown as comprising one or more transducers 1554c. In contrast to FIG. 14, the material application device 1552 is not shown as being mechanically coupled to a manifold. The fluid is provided directly to the material application device 1552 without mixing.

As shown in FIG. 15, the material application device 1552 and the vacuum application device 1554 may apply a pressure differential that may be applied to the coil groove of the coil assembly 220c. For example, the material application device 1552 may apply the infiltrating material to an external portion of the coil 220cc at a pressure that is greater than atmospheric pressure and the vacuum application device 1554 may apply a negative pressure that is less than the atmospheric pressure. Accordingly, the pressure differential may be substantially the same as a difference between the pressure of the infiltrating material and the negative pressure. The pressure of the fluid may be known from the pump and the negative pressure applied to the inner bore 222cb (see FIG. 12) of the coil bobbin 220cb may be known from the vacuum application device 1554. More specifically, the one or more transducers 1554c may measure the negative pressure.

As can be appreciated, in the example of FIG. 15, the negative pressure may be provided by the pump. Accordingly, the infiltrating material may flow through the coil 220cc and return back to the pump via the vacuum application device 1554. The flow of the infiltrating material through the coil 220cc can ensure that the infiltrating material completely fills the voids between the coil wire windings of the coil 220cc. This may be useful for infiltrating material that would otherwise not fully fill the voids due to, for example, including particles, having a relatively high viscosity, etc. The return of the material to the pump may also reduce material costs. Accordingly, the one or more transducers 1554c may measure properties of the infiltrating material returning to the pump and provide the measured properties to the controller so the controller can ensure that the infiltrating material completely fills the spaces or voids between the coil wire windings of the coil 220cc.

The above examples of the tool 1350, 1450, 1550 are merely illustrations of exemplary possible configurations. The above-described features, and other features not explicitly described, can be altered and/or combined according to the skill of those that practice in the art. For example, the vacuum application device 1554 is shown as being about the size of one of the bobbin openings 227cb (see FIG. 12). However, it could be understood that the vacuum application device 1554 may be viewed as representing an annular shape that covers all of the bobbin openings 227cb (see FIG. 12). Additionally, or alternatively, the material application device 1552 is shown as not covering the entire width of the coil 220cc. Those skilled in the art would understand that a user, robot, and/or the like could move the material application device 1552 in a motion parallel to the coil transducer centerline CL₁₀₂₀ so as to evenly dispense the infiltrating material.

As can be appreciated, the controller 1330, or other controllers, may be employed to automate some or all of the steps for applying a coil infiltrating material. The following describes methods of forming a coil bobbin for applying a coil infiltrating material to coil to form a coil assembly, such as the coil bobbins 220cb, 1020cb and coil assembly 220c described above.

### Methods of forming a coil bobbin

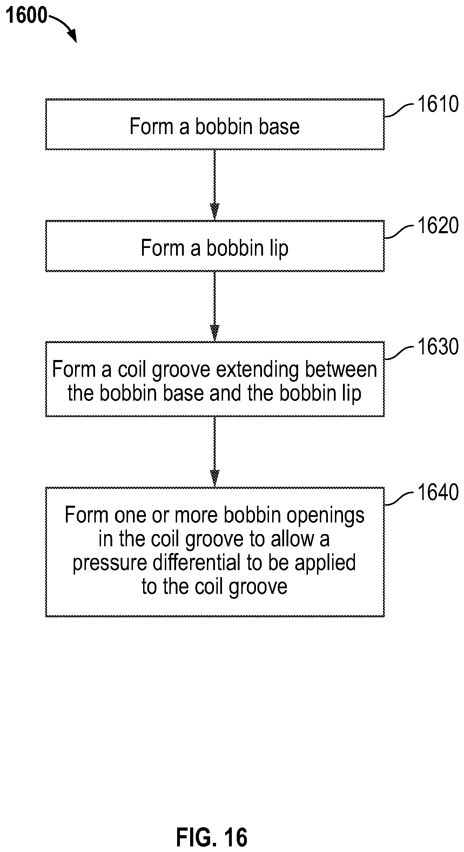

**FIG. 16** shows a method 1600 of forming a coil bobbin for infiltrating material into a coil. As shown in FIG. 16, the method 1600 begins in step 1610 by forming a bobbin base in step 1610. In step 1620, the method 1600 forms a bobbin lip. The coil bobbin may be any suitable coil bobbin, such as the coil bobbins 220cb, 1020cb described above. Accordingly, the bobbin base may be the bobbin base 225cb, 1025cb that is disposed at a proximate end of the coil bobbin 220cb, 1020cb and the bobbin lip may be the bobbin lip 226cb, 1026cb although any suitable bobbin base and bobbin lip may be employed. In step 1630, the method 1600 forms a coil groove extending between the bobbin base and the bobbin lip. The coil groove may be the coil groove 224cb, 1024cb described above, although any suitable coil groove may be employed. The method 1600, in step 1640, forms one or more bobbin openings in the coil groove to allow a pressure differential to be applied to the coil groove.

The step 1640 of forming the one or more bobbin openings to allow the pressure differential to be applied to the coil groove may comprise forming the one or more bobbin openings to allow a fluid to pass to or from the coil groove. Forming the one or more bobbin openings to allow the fluid to pass to or from the coil groove may comprise forming the one or more bobbin openings to allow the infiltrating material to pass to or from the coil groove. Additionally, or alternatively, forming the one or more bobbin openings to allow the fluid to pass to or from the coil groove comprises forming the one or more bobbin openings to allow a non-infiltrating material to pass to or from the coil groove. The non-infiltrating material comprises one of an atmospheric pressure non-infiltrating material being displaced to or from the coil groove and a non-atmospheric pressure non-infiltrating material being displaced to or from the coil groove.

The coil groove comprises a radius that is less than a radius of the bobbin base and a radius of the bobbin lip. Additionally, or alternatively, the coil groove may be at least partially defined by the bobbin base and the bobbin lip. As can be appreciated, forming the one or more bobbin openings may comprise forming through holes extending between a surface defining the coil groove and a surface defining an inner bore of the coil bobbin. Additionally, or alternatively, forming at least one of the one or more bobbin openings comprise forming a slot extending between the bobbin base and the bobbin lip. Forming the bobbin base may further comprise forming at least one coil wire groove extending from an exterior of the coil bobbin to the coil groove. The coil wire groove of the method 1600 may be the coil wire groove 228cb, 1028cb described above although any suitable coil wire groove may be employed.

The coil bobbin formed by method 1600 may be employed in a coil assembly, such as the coil assembly 220c described above. A method of forming a coil assembly is described in more detail in the following.

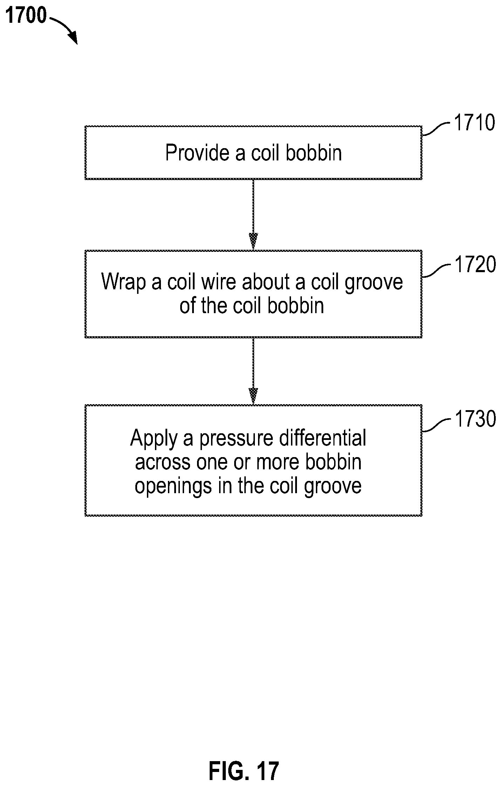

**FIG. 17** shows a method 1700 of forming a coil assembly by infiltrating material into a coil. As shown in FIG. 17, the method 1700 provides a coil bobbin in step 1710. The coil bobbin may be provided according to the foregoing method 1600, although any suitable method may be employed. In step 1720, the method 1700 wraps a coil wire about the coil groove of the coil bobbin. The coil wire may be the coil wire 220cw described above, although any suitable coil wire may be employed. The method 1700 in step 1730 may apply a pressure differential across the one or more bobbin openings in the coil groove.

The method 1700 may further comprise providing the infiltrating material to the coil wire wrapped about the coil groove of the coil bobbin. The pressure differential may be applied by applying at least one of a negative pressure and a positive pressure to the coil wire wrapped about the coil groove of the coil bobbin. At least one of the negative pressure and the positive pressure applied to the coil wire wrapped about the coil groove of the coil bobbin may be applied to at least one of an external portion and an internal portion of the coil wire wrapped about the coil groove of the coil bobbin. The at least one of the negative pressure and the positive pressure applied to the coil wire may comprise a pressure of one of the infiltrating material and a non-infiltrating material applied to the coil wire wrapped about the coil groove. The infiltrating material may comprise at least one of a plastic, a cement, a rubber, an epoxy, colloidal silica, sodium silicate, silicone, aluminum silicate (e.g., a hydrated aluminum silicate crystalline mineral such as Kaolin), and/or the like, and the non-infiltrating material may comprise air.

The above describes a coil bobbin 220cb, 1020cb, systems 1300, 1400, 1500, and methods 1600 and 1700 for infiltrating material into a coil 220cc. For example, the coil bobbin 220cb, 1020cb may include bobbin openings 227cb, 1027cb. A pressure differential may be applied across the bobbin openings 227cb, 1027cb to force the infiltrating material into interstices of windings of the coil, such as coil 220cc. By forcing the infiltrating material into the interstices or spacings between the windings of the coil, such as coil 220cc, the coil infiltrated material may be comprised entirely of the infiltrated material. As a result, the electrical and/or mechanical properties of the coil infiltrated material may be consistent within the same coil assembly, such as coil assembly 220c, and/or between multiple reproductions of the coil assembly, such as coil assembly 220c. The mechanical properties may include adhesion to the windings of the coil, such as the coil 220cc, thermal expansion coefficient, toughness, rigidity, and/or the like. The electrical properties may be dielectric loss, permittivity, dielectric breakdown voltage, conductivity, etc.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other coil bobbins, tools, systems, and methods for infiltrating material into a coil. Accordingly, the scope of the embodiments described above should be determined from the following claims.

## Claims

1. A coil bobbin (220cb, 1020cb) for coil infiltrating material into a coil (220cc), the coil bobbin (220cb, 1020cb) comprising:
a bobbin base (225cb, 1025cb);
a bobbin lip (226cb, 1026cb); and
a coil groove (224cb, 1024cb) extending between the bobbin base (225cb, 1025cb) and the bobbin lip (226cb, 1026cb);
wherein the coil groove (224cb, 1024cb) includes one or more bobbin openings (227cb, 1027cb) configured to apply a pressure differential to the coil groove (224cb, 1024cb), and further configured to allow a fluid to pass to or from the coil groove (224cb, 1024cb) upon application of a vacuum application device (1454, 1554) that induces the pressure differential across the one or more bobbin openings (227cb, 1027cb) of the coil groove (224cb, 1024cb).

2. The coil bobbin (220cb, 1020cb) of claim 1, wherein the one or more bobbin openings (227cb, 1027cb) being configured to allow the fluid to pass to or from the coil groove (224cb, 1024cb) comprises the one or more bobbin openings (227cb, 1027cb) being configured to allow the infiltrating material to pass to or from the coil groove (224cb, 1024cb).

3. The coil bobbin (220cb, 1020cb) of claim 1, wherein the one or more bobbin openings (227cb, 1027cb) comprise through holes extending between a surface defining the coil groove (224cb, 1024cb) and a surface defining an inner bore (222cb, 1022cb) of the coil bobbin (220cb, 1020cb).

4. The coil bobbin (220cb, 1020cb) of claim 1, wherein at least one of the one or more bobbin openings (227cb, 1027cb) comprise a slot extending between the bobbin base (225cb, 1025cb) and the bobbin lip (226cb, 1026cb).

5. The coil bobbin (220cb, 1020cb) of claim 1, wherein the bobbin base (225cb, 1025cb) further comprises at least one coil wire groove (228cb, 1028cb) extending from an exterior of the coil bobbin (220cb, 1020cb) to the coil groove (224cb, 1024cb).

6. A coil transducer (220, 1020) including coil infiltrated material in a coil (220cc), the coil transducer (220, 1020) comprising:
a coil bobbin (220cb, 1020cb) provided according to one of the foregoing claims 1 through 5;
a coil (220cc) disposed in the coil groove (224cb, 1024cb) extending between the bobbin base (225cb, 1025cb) and the bobbin lip (226cb, 1026cb); and
a coil infiltrated material (220ci) disposed between windings of the coil (220cc), the coil infiltrated material (220ci) being substantially absent of voids.

7. A method of forming a bobbin for infiltrating material into a coil, the method comprising:
forming a bobbin base;
forming a bobbin lip;
forming a coil groove extending between the bobbin base and the bobbin lip; and
forming one or more bobbin openings in the coil groove to allow a pressure differential to be applied to the coil groove;
forming the one or more bobbin openings to allow a fluid to pass to or from the coil groove;
applying a vacuum application device (1454, 1554) to the one or more bobbin openings;
inducing the pressure differential across the one or more bobbin openings of the coil groove;
passing the infiltrating material to or from the coil groove.

8. The method of claim 7, wherein forming the one or more bobbin openings to allow the fluid to pass to or from the coil groove comprises forming the one or more bobbin openings to allow a non-infiltrating material to pass to or from the coil groove.

9. The method of claim 7, wherein forming at least one of the one or more bobbin openings comprise forming a slot extending between the bobbin base and the bobbin lip.

10. The method of claim 7, wherein forming the bobbin base further comprises forming at least one coil wire groove extending from an exterior of the coil bobbin to the coil groove.

11. A tool (1350, 1450, 1550) for infiltrating material into a coil (220cc), the tool (1350, 1450, 1550) comprising:
a material application device (1352, 1452, 1552) configured to provide the infiltrating material to the coil (220cc) at a pressure that forms a pressure differential across one or more bobbin openings (227cb, 1027cb) of a coil groove (224cb, 1024cb) of a coil bobbin (220cb, 1020cb);
**characterized by**:
a vacuum application device (1454, 1554) configured to induce the pressure differential across the one or more bobbin openings (227cb, 1027cb) of the coil groove (224cb, 1024cb).

12. The tool (1350, 1450, 1550) of claim 11, wherein the material application device (1352, 1452, 1552) being configured to provide the infiltrating material to the coil (220cc) comprises the material application device (1352, 1452, 1552) being configured to apply the infiltrating material to the coil (220cc).

13. The tool (1350, 1450, 1550) of claim 11, wherein the material application device (1352, 1452, 1552) being configured to provide the infiltrating material to the coil (220cc) comprises the material application device (1352, 1452, 1552) being configured to deposit the infiltrating material onto the coil (220cc).

14. The tool (1350, 1450, 1550) of claim 11, wherein the vacuum application device (1454, 1554) comprises a sealing surface (1554b) configured to provide a seal.

15. A system (1300, 1400, 1500) for infiltrating material into a coil (220cc), the system (1300, 1400, 1500) comprising:
a tool (1350, 1450, 1550) according to one of the foregoing claims 11 through 14;
a pump (1310) configured to provide the infiltrating material to the tool (1350, 1450, 1550) at the pressure that forms a pressure differential across the one or more bobbin openings (227cb, 1027cb) of the coil groove (224cb, 1024cb) of the coil bobbin (220cb, 1020cb);
**characterized by**:
a controller (1330) configured to control at least one of a flow rate and the pressure of the infiltrating material provided to the tool (1350, 1450, 1550).

16. The system (1300, 1400, 1500) of claim 15, wherein the pump (1310) is further configured to receive the infiltrating material from the tool (1350, 1450, 1550).

17. The system (1300, 1400, 1500) of claim 15, further comprising a vacuum pump (1340) configured to provide a negative pressure to the tool (1350, 1450, 1550).
